# EUROPÄISCHE PATENTSCHRIFT

(11) **EP 0 853 756 B1**
(45) Veröffentlichungstag und Bekanntmachung des Hinweises auf die Patenterteilung: **02.07.2003**
(21) Anmeldenummer: 97921826.0
(22) Anmeldetag: 29.04.1997
(51) Int. Cl.: G01G 19/393

(54) **KOMBINATIONSWAAGE**
COMBINAISON SCALE
BALANCE POUR PESER PAR COMBINAISON

(30) Priorität: 06.05.1996 DE 19617982
(43) Veröffentlichungstag der Anmeldung: 22.07.1998
(73) Patentinhaber: MULTIPOND WÄGETECHNIK GMBH, 84478 Waldkraiburg (DE)
(72) Erfinder: ZEYER, Bernd, D-84549 Engelsberg (DE)
(74) Vertreter: Prüfer, Lutz H., Dipl.-Phys.
(86) Internationale Anmeldenummer: EP9702204
(87) Internationale Veröffentlichungsnummer: WO97042471

(56) Entgegenhaltungen:
- EP-A- 0 105 756
- EP-A- 0 326 636
- EP-A- 0 502 201
- EP-A- 0 677 460
- WO-A-96/07083
- DE-A- 3 636 923
- DE-U- 8 437 028

## Beschreibung

Die Erfindung betrifft eine Kombinationswaage nach dem Oberbegriff des Patentanspruches 1.

Aus der WO 96/07083 ist eine Kombinationswaage mit einer Mehrzahl von Wägebehältern, die in einer Reihe angeordnet sind, und einer Fördervorrichtung zum Transport des von den Wägebehältern abgeworfenen Wägegutes zu einem Auslaßtrichter bekannt.
Durch die lineare Anordnung der Wägebehälter ist die Zeitdauer des Transports des Wägeguts von dem Auslasstrichter am weitesten entfernten Wägebehältern zu dem Auslasstrichter lang, wodurch die Zeitdauer des Wägevorgangs groß ist.

Die EP 0 502 201 A1 offenbart ebenfalls eine Kombinationswaage, bei der die Wägebehälter in einer Reihe angeordnet sind. Unterhalb der Wägebehälter sind zwei gegenläufige Förderbänder vorgesehen, die die abgegebenen Produkte zu einem Ausgabetrichter fördern. Auch hier führt der große Abstand einiger Wägebehälter zu dem Auslasstrichter zu einer langen Zeitdauer des Wägevorgangs, da das Wägegut über eine große Strecke transportiert werden muss.

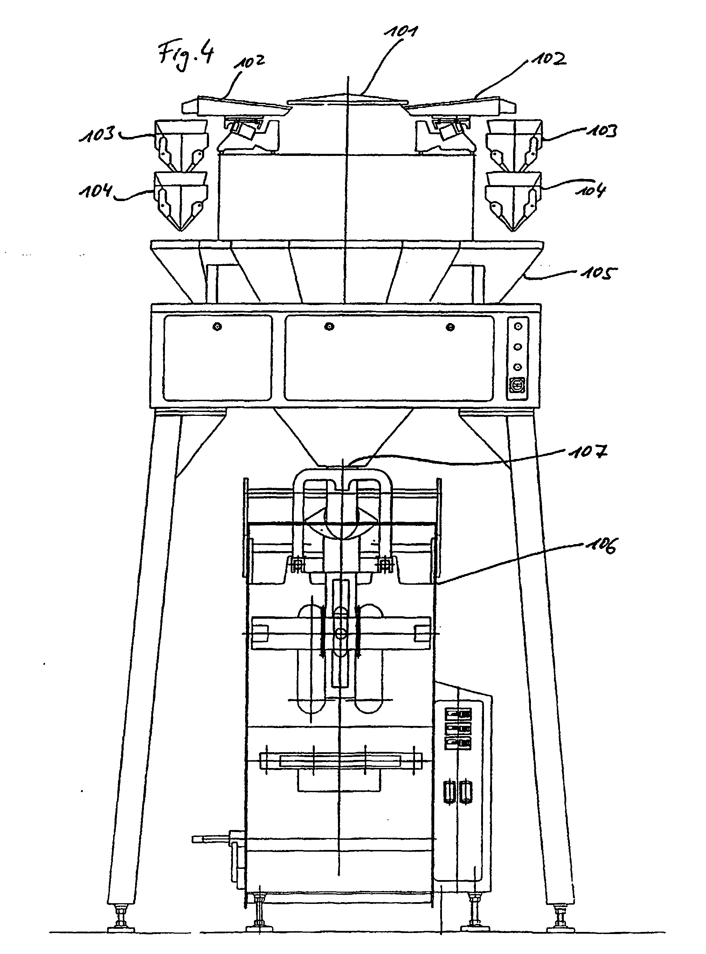

Eine Kombinationswaage nach dem Oberbegriff des Patentanspruches 1 ist aus der EP 0 677 460 A2 bekannt und wird für die automatische Herstellung gleicher Produktmengen (Portionsgewichte) verwendet (Fig. 4). Diese Kombinationswaage arbeitet nach dem Kombinationsprinzip. Dabei wird die Gewichtsportion aus mehreren passenden Teilkombinationen kombiniert. Voraussetzung für eine genügende Anzahl von Kombinationen ist einen genügende Anzahl von Wägesystemen. Die Wägesysteme mit den Wägebehältern 104 sind im Kreis um eine zentrale Verteilvorrichtung 101 herum angeordnet. Das Produkt wird im Zentrum von oben her der zentralen Verteilvorrichtung 101 zugeführt und von dort über Vibrationsrinnen 102 in zeitlich festgelegten Förderintervallen radial nach außen in Bereitstellungsbehälter 103 transportiert. Von dort gelangt es durch Entleerungsvorgänge in die darunter befindlichen Wägebehälter 104. Dort werden die Teilportionen gewogen und stehen für die Kombination einer Gesamtportion zur Verfügung. Schließlich werden die für eine Gesamtportion ausgewählten Teilportionen in einem Sammeltrichter 105 zu einer gemeinsamen Übergabestelle, nämlich der Auslaßöffnung 107 am unteren Ende des Sammmeltrichters zusammengeführt, die beispielsweise in das Füllrohr einer Verpackungsmaschine 106 mündet.

Bei empfindlichen stückigen . Produkten von zerbrechlicher Konsistenz und/oder empfindlicher Oberflächenbeschaffenheit, wie z.B. Backwaren mit oder ohne Überzug aus Schokolade oder dergleichen, besteht die Schwierigkeit, daß während des beschriebenen Portionierungsvorganges die Produkte mehrmals im freien Fall oder über die lange schräge Wand des Sammeltrichters rutschend beschleunigt und wieder abrupt abgebremst werden und dabei zerbrechen oder beschädigt werden können.

Aus der EP 0 326 636 A1 ist der Oberbegriff des Patentanspruches 1 bekannt.

Aus der DE 37 16 979 A1 ist eine Kombinationswaage bekannt, bei der die Wägebehälter in einer Reihe hintereinander angeordnet sind. Oberhalb von jedem Wägebehälter ist jeweils eine Zuführungsschale angeordnet. Unterhalb der Wägebehälter ist ein Förderband angeordnet, das die aus den Wägebehältern entladenen Erzeugnisse einsammelt und zum Verpacken transportiert.

Aufgabe der Erfindung ist es, eine Kombinationswaage zur Verfügung zu stellen, die empfindliche Wägegüter verarbeiten kann, ohne die Wägegüter zu beschädigen.

Die Aufgabe wird durch die im Patentanspruch 1 angegebene Kombinationswaage gelöst.

Bei der Kombinationswaage ist die Anzahl der Fallwege durch den Wegfall der Bereitstellungsbehälter reduziert. Weiterhin werden durch die Fördervorrichtung, die den üblichen Sammeltrichter ersetzt, die lange Gleitwege in dem Sammeltrichter vermieden. Somit weist die Kombinationswaage auch eine geringe Bauhöhe auf.

Weiterbildungen der Erfindung sind in den Unteransprüchen angegeben.

Bei der Kombinationswaage nach Anspruch 8 ist die unvermeidliche Übergabestelle von Vibrationsrinne zu Wägebehälter für die Produkte durch einen kurzen Gleitweg anstelle des üblichen Fallweges schonender.

Es folgt die Beschreibung von Ausführungsformen anhand der Figuren. Von den Figuren zeigen
- Fig. 1: eine Querschnittsansicht einer ersten Ausführungsform der erfindungsgemäßen Kombinationswaage;
- Fig. 2: eine Draufsicht der in Fig. 1 gezeigten Kombinationswaage mit weggelassener Verteilvorrichtung;
- Fig. 3: eine Querschnittsansicht eines Teiles einer zweiten Ausführungsform der Kombinationswaage; und
- Fig. 4: eine schematische Darstellung einer bekannten Kombinationswaage.

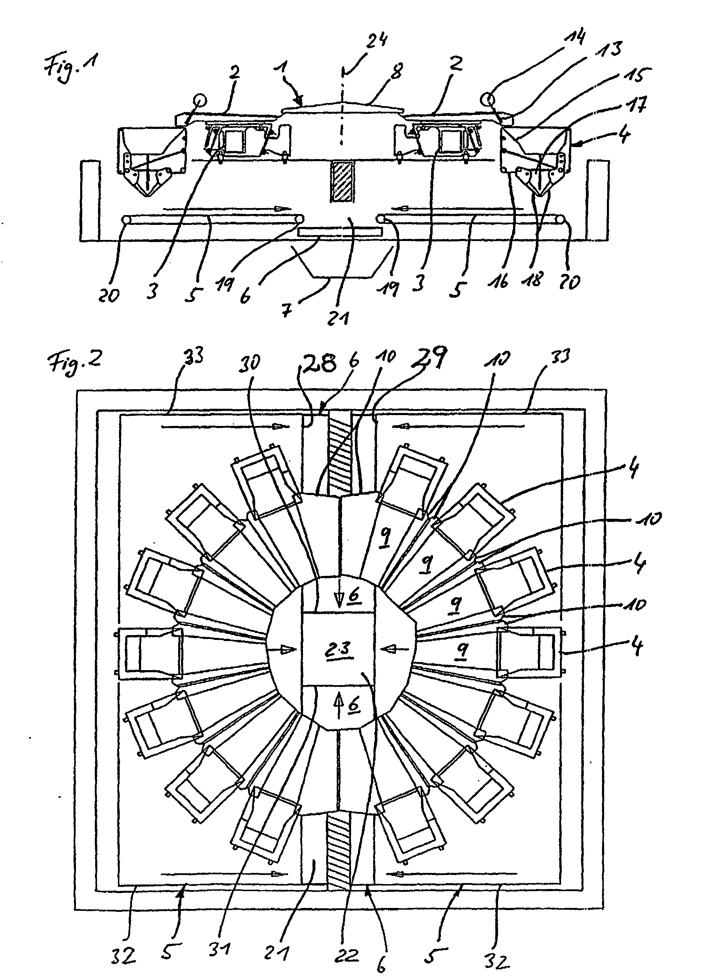

Wie in Fig. 1 und Fig. 2 gezeigt ist, weist die Kombinationswaage eine Verteilvorrichtung 1, vierzehn Vibrationsrinnen 2 und vierzehn Vibrationsmotore 3, vierzehn Wägebehälter 4, zwei erste Förderbänder 5, zwei zweite Förderbänder 6 und eine Auslaßöffnung 7 auf.

Es sind jeweils sieben Wägbehälter 4 auf zwei Kreishälften eines Kreises angeordnet. Die konisch ausgebildete Verteilvorrichtung 1 weist eine Symmetrieachse 24 auf und ist so oberhalb der Wägebehälter 4 angeordnet, daß die Symmetrieachse 24 die durch den Kreis festgelegte Ebene senkrecht im Mittelpunkt des Kreises schneidet. Eine von den Wägebehältern 4 wegweisende Oberseite 8 der Verteilvorrichtung 1 ist von der Symmetrieachse 24 radial zu den Wägebehältern 1 nach unten geneigt. Weiter sind die vierzehn Vibrationsrinnen 2 kreisförmig angeordnet, deren inneres Ende jeweils unter der Verteilvorrichtung 1 vorgesehen ist und deren äußeres Ende jeweils in einen der Wägebehälter 4 mündet.

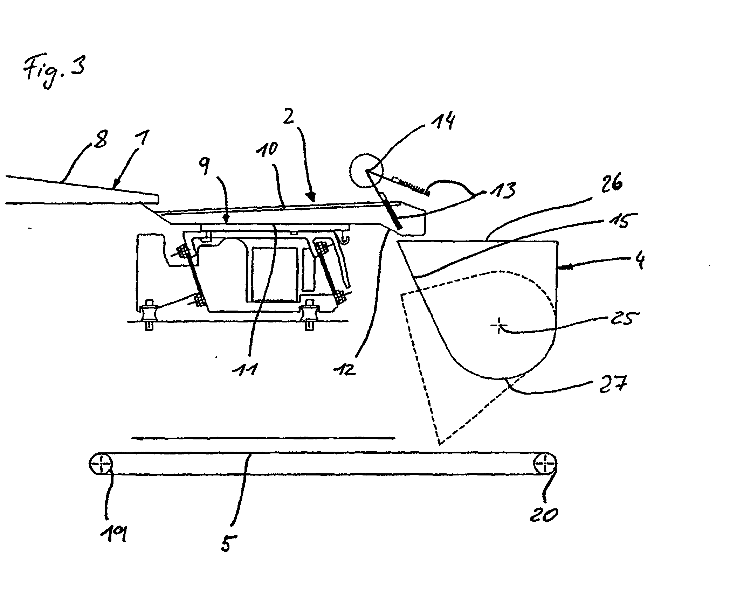

Jede der Vibrationsrinnen 2 ist mit einem Vibrationsmotor 3 verbunden und weist einen Boden 9 und zwei den Boden 9 seitlich begrenzende Seitenwände 10 auf. Die Seitenwände 10 sind zu der jeweils benachbarten Vibrationsrinne 2 hin geneigt. Jeweils eine der Seitenwände 10 einer Vibrationsrinne 2 ist etwas höher als die andere und an ihrem oberen Rand so weit nach unten umgekantet, daß sie die angrenzende Seitenwand 10 der angrenzenden Vibrationsrinne 2 überlappt. Damit kann kein Produkt zwischen die Vibrationsrinnen 2 fallen. Die Seitenwände 10 stehen ein Stück über das in den Wägebehälter 4 mündende Ende des Bodens 9 über. Wie am besten in Fig. 3 gezeigt ist, weist der Boden 9 einen ersten Bodenabschnitt 11 und einen zweiten daran anschließenden Bodenabschnitt 12 auf. Der erste Bodenabschnitt 11 ist im wesentlichen parallel zu der Kreisebene ausgerichtet und der zweite Bodenabschnitt 12 ist von dem ersten Bodenabschnitt 11 zu dem Wägebehälter 4 nach unten geneigt und endet über dem Wägebehälter 4. Eine an den zweiten Bodenabschnitt angrenzende Innenwand 15 des Wägebehälters 4 weist die gleiche Neigung wie der zweite Bodenabschnitt 12 auf. Wie in Fig. 1 gezeigt ist, weist der Wägebehälter einen Behälterboden 16 mit einer Bodenöffnung 17 auf. Die Bodenöffnung 17 ist durch zwei Bodenklappen 18 verschließbar.

Weiter ist für jede Vibrationsrinne 2 am äußeren Ende der Vibrationsrinne 2 eine Stoppklappe 13 vorgesehen. Die Stoppklappen 13 sind jeweils um eine erste Achse 14, die sich im wesentlichen parallel zu der Kreisebene erstreckt, schwenkbar mit einem Rahmen der Kombinationswaage verbunden. Wie in Fig. 3 gezeigt ist, ist die Stoppklappe 13 in eine erste Position (mit durchgezogenen Linien gezeichnet) schwenkbar. In dieser ersten Position ist der Förderweg für die zu fördernden Produkte sicher unterbrochen. Von dieser ersten Position ist die Stoppklappe 13 in eine zweite Position (mit gestrichelten Linien gezeichnet) schwenkbar, in der der Förderweg freigegeben ist.

Unterhalb der Wägebehälter 4 ist jeweils für die sieben Wägebehälter 4 einer Kreishälfte ein erstes Förderband 5 im wesentlichen parallel zur Kreisebene angeordnet. Die Förderrichtung der beiden Förderbänder 5 ist entgegengesetzt, so daß sie die Produkte in Richtung zu dem jeweils anderen Förderband 5 fördern. Die beiden Förderbänder 5 sind als Endlosband mit jeweils zwei seitlichen Rändern 32, 33 , einem abgabeseitigen ersten Rand 28, 29, einer ersten angetriebenen Umlenkrolle 19 und einer dazu parallelen zweiten Umlenkrolle 20 ausgebildet. Die erste Umlenkrolle 19 wird jeweils durch einen nicht gezeigten Motor angetrieben. Im Bereich unterhalb des Kreismittelpunktes sind die sich gegenüberliegenden und parallel zueinander ausgerichteten ersten Umlenkrollen 19 und damit die abgabeseitigen ersten Ränder 28, 29 durch einen ersten Abstand voneinander getrennt. Der erste Abstand ist so gewählt, daß er größer ist als die maximale Größe der zu verabeitenden Produkte. Somit sind die Förderbänder 5 durch eine ersten Zwischenraum 21 voneinander getrennt. Die Breite der Förderbänder 5 senkrecht zu ihren Förderrichtungen und die Länge der Förderbänder 5 in Förderrichtung sind jeweils so groß gewählt, daß die Förderbänder 5 alle von den jeweils sieben Wägebehältern abgegebenen Produkte aufnehmen. Unterhalb der ersten Förderbänder 5 sind zwei gegenläufig arbeitende zweite Förderbänder 6 im wesentlichen parallel zu der Kreisebenene angeordnet. Die Förderrichtung der zweiten Förderbänder 6 ist im wesentlichen senkrecht zu der der ersten Förderbänder 5. Die zweiten Förderbänder 6 sind jeweils als Endlosband mit einer dritten angetriebenen Umlenkrolle und einer dazu parallelen vierten Umlenkrolle ausgebildet. Die dritten Umlenkrollen werden durch einen Motor angetrieben. Die Umlenkrollen der zweiten Förderbänder 6 erstrecken sich im wesentlichen senkrecht zu den Achsen der Umlenkrollen 19, 20 der ersten Förderbänder 5. Die zwei sich gegenüberliegenden dritten Umlenkrollen der zweiten Förderbänder 6 sind zueinander parallel. Zwei abgabeseitige zweite Ränder 30, 31 der zweiten Förderbänder 6 weisen einen zweiten Abstand auf, der größer als die maximale Größe der zu verarbeitende Produkte gewählt ist. Damit sind die zweiten Förderbänder 6 durch einen zweiten Zwischenraum 22 voneinander getrennt. Die Breite der zweiten Förderbänder 6 senkrecht zur ihrer Förderrichtung ist größer als der erste Abstand gewählt. Die zweiten Förderbänder 6 erstrecken sich jeweils von einem der seitlichen Ränder 32, 33 der ersten Förderbänder 5 bis zu der Auslaßöffnung und sind so unterhalb der ersten Förderbänder 5 angeordnet, daß im Bereich unterhalb des Kreismittelpunktes ein rechteckiger Öffnungsquerschnitt 23 gebildet ist, dessen Seitenlängen durch den ersten und zweiten Abstand bestimmt ist. Unterhalb des Öffnungsquerschnittes 23 ist die Auslaßöffnung 7 angeordnet.

Weiter ist eine nicht gezeigte Steuerung vorgesehen, die die Vibrationsmotore 3, die Wägebehälter 4, die Förderbänder 5, 6 und die Stoppklappe 13 steuert.

In einer zweiten Ausführungsform ist der Wägebehälter 4 abgewandelt. Wie in Fig. 3 gezeigt ist, weist der Wägebehälter 4 eine Bodenfläche 27, die im Querschnitt gesehen kreissegmentförmig ist, daran anschließende Seitenflächen und eine Behälteröffnung 26 auf. Der Wägebehälter 4 ist um eine zweite Drehachse 25, die sich im wesentlichen parallel zur Kreisebene erstreckt, drehbar montiert. Die in der Aufnahmeposition des Wägebehälters 4 an den zweiten Bodenabschnitt 12 der Vibratinsrinne 2 angrenzende Innenwand 15 des Wägebehälters 4 ist zu einer senkrecht zur Kreisebene verlaufenden Achse um einen vorbestimmten Winkel zu der Vibrationsrinne hin geneigt. Der Winkel liegt im einem Bereich von 20° - 60°. Bevorzugt entpricht der Winkel der Neigung des zweiten Bodenabschnittes 12. In der Abgabeposition des Wägebehälters 4 bilden die Seitenwand 15 und der Boden 27 eine Abgaberutsche. Der Wägebehälter 4 ist von der Aufnahmeposition (mit durchgezogenen Linien in Fig. 3 gezeichnet), in der die Behälteröffnung 26 nach oben weist, in Richtung zu der Vibrationsrinne 2 hin in die Abgabeposition (mit gestrichelten Linien in Fig. 3 gezeichnet), in der die Behälteröffnung 26 zu dem ersten Förderband 5 weist, kippbar. In der Abgabeposition ist die Oberkante der Innenwand 15 knapp über dem ersten Förderband 5 angeordnet und die Innenwand 15 ist so zu dem ersten Förderband 5 nach unten geneigt, daß die Innenwand 15 und der Boden 27 als die Abgaberutsche dienen und die in den Wägebehältern 4 befindlichen Produkte sanft auf das erste Förderband 5 gleiten können.

In einer weiteren Ausführungsform sind die Förderbänder 5, 6 von den Wägebehältern 4 zu der Auslaßöffnung 7 nach unten geneigt.

Im Betrieb wird der Verteilvorrichtung 1 kontinuierlich oder in größeren Chargen das stückige Produkt zugeführt. Die Produkte werden dann von der Verteilvorrichtung 1 über die Vibrations-rinnen 2 in zeitlich festgelegten Förderintervallen radial nach außen in die Wägebehälter 4 transportiert. Dabei rutschen die Produkte jeweils sanft über den zweiten Bodenabschnitt 12 der Vibrationsrinne 2 und die Innenwand 15 des Wägebehälters 4 in den Wägebehälter 4. Dann wird die Förderung der Vibrationsrinnen 2 gestoppt und die Stoppklappen 13 werden in die erste Position geschwenkt, so daß der Förderweg unterbrochen ist und keine Produkte in die Wägebehälter 4 nachrutschen können. Der Wägebehälter 4 wiegen dann die in ihnen enthaltenen Teilportionen der Produkte. Die Steuerung wählt die gewünschten Teilportionen aus und öffnet die entsprechenden Bodenklappen 18. In der zweiten Ausführungsform werden die entsprechenden Wägebehälter 4 um ihre zweite Drehachse 25 von der Aufnahmeposition zur Kreismitte hin in die Abgabeposition geschwenkt, so daß die Produkte den Wägebehälter 4 gleitend verlassen. Danach werden die Bodenklappen 18 wieder geschlossen bzw. die Wägebehälter 4 in die Aufnahmeposition zurückgeschwenkt. Dann werden die auf die ersten Förderbänder 5 abgegebenen Produkte zu den abgabeseitigen ersten Rändern 28, 29 gefördert und abhängig von der Position der Produkte senkrecht zur Förderrichtung der ersten Förderbänder 5 an den abgabeseitigen Ränder 28, 29 an die Auslaßöffnung 7 abgegeben oder den zweiten Förderbändern 6 übergeben. Die zweiten Förderbänder 6 fördern nun ihrerseits die aufgenommen Produkte zu den abgabeseitigen zweiten Ränder 30, 31 und geben die Produkte an die Auslaßöffnung 7 ab. Somit werden die aus den Wägebehältern 4 abgeworfenen Produkte zur Auslaßöffnung 7 zur Gesamtportion zusammengeführt. Danach werden die zugehörigen Stoppklappen 13 der entleerten Wägebehälter 4 wieder geöffnet und der gesamte Ablauf wird wiederholt.

## Patentansprüche

1. Kombinationswaage mit einer Verteilvorrichtung (1) zum Verteilen von zuzuführenden Produkten und einer Mehrzahl von um diese herum im wesentlichen in einer Ebene angeordneten Wägebehältern (4),
einer Mehrzahl von Zuführeinrichtungen (2, 3) zum Zuführen der Produkte von der Verteilvorrichtung (1) zu jeweils einem Wägebehälter (4) und
einer Vorrichtung, die unterhalb der Wägebehälter (4) angeordnet ist und die eine zentrale Ausgangsöffnung (7) aufweist, **dadurch gekennzeichnet, daß**
die Vorrichtung als eine Fördervorrichtung mit einem Förderelement (5, 6) und einem Antriebselement ausgebildet ist, wobei
das Förderelement (5, 6) unterhalb der Wägebehälter (4) angeordnet ist und derart durch das Antriebselement antreibbar ist,
daß die von den Wägebehältern (4) abgeworfenen Produkte zu der Ausgangsöffnung (7) gefördert werden.

2. Kombinationswaage nach Anspruch 1, **dadurch gekennzeichnet, daß**
die Fördervorrichtung zwei gegenläufig arbeitende erste Förderbänder (5) aufweist, die jeweils unter einem Teil der Wägebehälter (4) angeordnet sind und sich von dem in Förderrichtung gesehenen am weitesten von der Ausgangsöffnung (7) entfernten Wägebehälter (4) bis zur Ausgangsöffnung (7) erstrecken.

3. Kombinationswaage nach Anspruch 2, **dadurch gekennzeichnet, daß**
die ersten Förderbänder (5) jeweils von den Wägebehältern (4) zu der Ausgangsöffnung (7) nach unten geneigt sind.

4. Kombinationswaage nach Anspruch 2 oder 3, **dadurch gekennzeichnet, daß**
die beiden abgabeseitigen Ränder (28, 29) der ersten Förderbäner (5) einen Abstand voneinander haben und daß unterhalb der abgabeseitigen Ränder (28, 29) eine sich entlang der Ränder bis zur Ausgangsöffnung (7) erstreckende Fördereinrichtungen (6) vorgesehen ist.

5. Kombinationswaage nach Anspruch 4, **dadurch gekennzeichnet, daß** die Fördereinrichtung (6) zwei sich jeweils von der den größten Abstand von der Ausgangsöffnung (7) aufweisenden Seite der Ränder (28, 29) bis zu der Ausgangsöffnung (7) erstreckende Förderbänder (6) umfaßt.

6. Kombinationswaage nach Anspruch 5, **dadurch gekennzeichnet, daß**
die zweiten Förderbänder (6) jeweils von den Wägebehältern (4) zu der Ausgangsöffnung (7) nach unten geneigt sind.

7. Kombinationswaage nach einem der Ansprüche 4 bis 6, **dadurch gekennzeichnet,**
**daß** die Förderrichtung der ersten Förderbänder (5) mit der Förderrichtung der zweiten Förderbänder (6) einen Winkel von ungefähr 90° bildet.

8. Kombinationswaage nach einem der Ansprüche 1 bis 7, **dadurch gekennzeichnet, daß**
die Zuführeinrichtung (2, 3) eine Vibrationsrinne (2) aufweist, die in Schwingung versetzbar ist und deren abgabeseitiges Ende oberhalb eines zugeordneten Wägebehälters (4) angeordnet ist, die Vibrationsrinne (2) einen Boden (9) mit einem ersten Bodenabschnitt (11) und einen daran anschließenden zweiten Bodenabschnitt (12) aufweist, der sich bis zu dem abgabeseitigen Ende erstreckt, wobei der erste Bodenabschnitt (11) im wesentlichen parallel zu der Ebene angeordnet ist und der zweite Bodenabschnitt (12) zu dem Wägebehälter (4) nach unten geneigt ist,
und daß eine an den zweiten Bodenabschnitt (12) angrenzende Innenwand (15) des Wägebehälters (4) eine Neigung aufweist, die im wesentlichen der Neigung des zweiten Bodenabschnittes (12) entspricht.

9. Kombinationswaage nach einem der Ansprüche 1 bis 8, **dadurch gekennzeichnet, daß**
am abgabeseitigen Ende der Zuführeinrichtung (2, 3) eine über einen Antrieb betätigbare schwenkbare Stoppklappe (13) angebracht ist, mit der die Zuführung der Produkte zu dem zugehörigen Wägebehälter (4) unterbrechbar ist.

10. Kombinationswaage nach einem der Ansprüche 1 bis 9, **dadurch gekennzeichnet, daß**
die Wägebehälter (4) jeweils eine verschließbare Bodenklappe (18) aufweisen.

11. Kombinationswaage nach Anspruch 8 oder 9, **dadurch gekennzeichnet, daß**
die Wägebehälter (4) jeweils um eine sich im wesentlichen parallel zur Ebene erstreckende Achse (25) von der Aufnahmeposition zur Aufnahme der Produkte von der Zuführeinrichtung (2, 3) in die Abgabeposition zur Abgabe der aufgenommenen Produkte auf das Förderelement (5) derart schwenkbar ist, daß die geneigte Innenwand (15) zu dem Förderelement hin geneigt ist und als Abgaberutsche dient.

12. Kombinationswaage nach einem der Ansprüche 6 bis 11, **dadurch gekennzeichnet, daß**
die Neigung der Förderbänder (5, 6) bis ca. 20° und vorzugsweise bis ca. 15° beträgt.

## Claims

1. A combination balance, having a distributing device (1) for the purpose of distributing products to be supplied and a plurality of weighing containers (4) arranged around the latter substantially in one plane,
a plurality of supply devices (2, 3) for the purpose of supplying the products from the distributing device (1) to a respective weighing container (4) and
a device arranged below the weighing containers (4) and having a central exit opening (7),
**characterised in that**
the device is constructed as a conveying device having a conveying element (5, 6) and a drive element, the conveying element (5, 6) being arranged below the weighing containers (4) and being drivable by the drive element such that the products discharged from the weighing containers (4) are conveyed to the exit opening (7).

2. A combination balance according to Claim 1, **characterised in that** the conveying device has two first conveyor belts (5) operating in opposed directions and each arranged below some of the weighing containers (4) and extending from the weighing container (4) furthest away from the exit opening (7), as seen in the direction of conveying, to the exit opening (7).

3. A combination balance according to Claim 2, **characterised in that** the first conveyor belts (5) are each inclined downwards from the weighing containers (4) to the exit opening (7).

4. A combination balance according to Claim 2 or 3, **characterised in that** the two edges (28, 29) of the first conveyor belts (5), on the release side, are at a spacing from one another, and **in that** below the edges (28, 29) on the release side there is provided a conveying devices [sic] (6) extending along the edges to the exit opening (7).

5. A combination balance according to Claim 4, **characterised in that** the conveying device (6) includes two conveyor belts (6) which each extend from the side of the edges (28, 29) having the largest spacing from the exit opening (7) to the exit opening (6).

6. A combination balance according to Claim 5, **characterised in that** the second conveyor belts (6) are each inclined downwards from the weighing containers (4) to the exit opening (7).

7. A combination balance according to one of Claims 4 to 6, **characterised in that** the direction in which the first conveyor belts (5) are conveyed forms an angle of approximately 90° with the direction in which the second conveyor belts (6) are conveyed.

8. A combination balance according to one of Claims 1 to 7, **characterised in that** the supply device (2, 3) has a vibrating channel (2) which may be made to vibrate and whereof the release end is arranged above an associated weighing container (4),
the vibrating channel (2) has a base (9) with a first base section (11) and adjoining the latter a second base section (12) which extends as far as the release end, with the first base section (11) being arranged substantially parallel to the plane and the second base section (12) being inclined downwards towards the weighing container (4), and
**in that** an inner wall (15) of the weighing container (4), which adjoins the second base section (12), is at an angle of inclination substantially corresponding to the angle of inclination of the second base section (12).

9. A combination balance according to one of Claims 1 to 8, **characterised in that** at the release end of the supply device (2, 3) there is mounted a pivotal stop flap (13) which may be actuated by way of a drive and may be used to interrupt the supply of products to the associated weighing container (4).

10. A combination balance according to one of Claims 1 to 9, **characterised in that** the weighing containers (4) each have a closable base flap (18).

11. A combination balance according to Claim 8 or 9, **characterised in that** the weighing containers (4) are each pivotal about an axis (25) extending substantially parallel to the plane from the receiving position for receiving the products from the supply device (2, 3) into the release position for the release of the received products onto the conveying element (5) in such a way that the inclined inner wall (15) is inclined towards the conveying element and serves as a release chute.

12. A combination balance according to one of Claims 6 to 11, **characterised in that** the angle of inclination of the conveyor belts (5, 6) is up to approximately 20° and preferably up to approximately 15°.

## Revendications

1. Balance universelle avec un dispositif distributeur (1) pour distribuer des produits à amener et avec plusieurs récipients de pesée (4) disposés autour de ce dispositif distributeur globalement dans un plan,
avec plusieurs dispositifs d'amenée (2, 3) pour amener les produits du dispositif distributeur (1) à un récipient de pesée (4) respectif, et
avec un dispositif qui est placé au-dessous des récipients de pesée (4) et qui comporte un orifice de sortie (7) central,
**caractérisée en ce que**
le dispositif est conçu comme un dispositif transporteur avec un élément transporteur (5, 6) et avec un élément d'entraînement, l'élément transporteur (5, 6) étant disposé au-dessous des récipients de pesée (4) et pouvant être entraîné par l'élément d'entraînement de telle sorte que les produits jetés hors des récipients de pesée (4) sont transportés vers l'orifice de sortie (7).

2. Balance universelle selon la revendication 1, **caractérisée en ce que** le dispositif transporteur comporte deux premières bandes transporteuses (5) qui travaillent en sens contraire, qui sont placées chacune sous une partie des récipients de pesée (4) et qui s'étendent du récipient de pesée (4) le plus éloigné de l'orifice de sortie (7), vu dans la direction de transport, jusqu'à l'orifice de sortie (7).

3. Balance universelle selon la revendication 2, **caractérisée en ce que** les premières bandes transporteuses (5) sont inclinées à chaque fois des récipients de pesée (4) vers l'orifice de sortie (7) vers le bas.

4. Balance universelle selon la revendication 2 ou 3, **caractérisée en ce que** les deux bords côté déchargement (28, 29) des premières bandes transporteuses (5) sont à une certaine distance l'un de l'autre et **en ce que**, au-dessous des bords côté déchargement (28, 29), il est prévu des dispositifs transporteurs (6) s'étendant le long des bords jusqu'à l'orifice de sortie (7).

5. Balance universelle selon la revendication 4, **caractérisée en ce que** le dispositif transporteur (6) comprend deux bandes transporteuses (6) s'étendant à chaque fois du côté, le plus distant de l'orifice de sortie (7), des bords (28, 29) jusqu'à l'orifice de sortie (7).

6. Balance universelle selon la revendication 5, **caractérisée en ce que** les deuxièmes bandes transporteuses (6) sont inclinées à chaque fois des récipients de pesée (4) vers l'orifice de sortie (7) vers le bas.

7. Balance universelle selon l'une des revendications 4 à 6, **caractérisée en ce que** la direction de transport des premières bandes transporteuses (5) forme avec la direction de transport des deuxièmes bandes transporteuses (6) un angle d'environ 90°.

8. Balance universelle selon l'une des revendications 1 à 7, **caractérisée**
**en ce que** le dispositif d'amenée (2, 3) comporte un canal vibrant (2) qui peut être mis en oscillation et dont l'extrémité côté déchargement est placée au-dessus d'un récipient de pesée (4) associé,
**en ce que** le canal vibrant (2) comporte un fond (9) avec une première partie de fond (11) et avec une deuxième partie de fond (12) qui est adjacente à la première et qui s'étend jusqu'à l'extrémité côté déchargement, la première partie de fond (11) étant globalement parallèle au plan et la deuxième partie de fond (12) étant inclinée vers le récipient de pesée (4) vers le bas,
et **en ce qu'**une paroi intérieure (15), adjacente à la deuxième partie de fond (12), du récipient de pesée (4) a une inclinaison qui correspond globalement à l'inclinaison de la deuxième partie de fond (12).

9. Balance universelle selon l'une des revendications 1 à 8, **caractérisée en ce que**, à l'extrémité côté déchargement du dispositif d'amenée (2, 3), il y a un volet d'arrêt pivotant (13) qui peut être actionné par l'intermédiaire d'un dispositif d'entraînement et avec lequel l'amenée des produits au récipient de pesée (4) associé peut être interrompue.

10. Balance universelle selon l'une des revendications 1 à 9, **caractérisée en ce que** les récipients de pesée (4) comportent chacun un volet de fond (18) pouvant être fermé.

11. Balance universelle selon la revendication 8 ou 9, **caractérisée en ce que** chaque récipient de pesée (4) est pivotant autour d'un axe (25), s'étendant globalement parallèlement au plan, de la position de réception pour recevoir les produits venant du dispositif d'amenée (2, 3) dans la position de déchargement pour décharger les produits reçus sur l'élément transporteur (5) de telle sorte que la paroi intérieure inclinée (15) est inclinée vers l'élément transporteur et sert de toboggan de déchargement.

12. Balance universelle selon l'une des revendications 6 à 11, **caractérisée en ce que** l'inclinaison des bandes transporteuses (5, 6) vaut jusqu'à 20° environ et de préférence jusqu'à 15° environ.
